(19) Europäisches Patentamt / European Patent Office / Office européen des brevets

(11) **EP 4 017 122 A1**

(12) **EUROPEAN PATENT APPLICATION**
published in accordance with Art. 153(4) EPC

(43) Date of publication:
**22.06.2022 Bulletin 2022/25**

(21) Application number: **20879058.4**

(22) Date of filing: **01.09.2020**

(51) International Patent Classification (IPC):
***H04W 48/12*** *(2009.01)*

(52) Cooperative Patent Classification (CPC):
**H04W 16/14; H04W 48/12**

(86) International application number:
**PCT/CN2020/112847**

(87) International publication number:
**WO 2021/077905 (29.04.2021 Gazette 2021/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2019   CN 201911006835**

(71) Applicant: **ZTE Corporation**
**Shenzhen, Guangdong  518057 (CN)**

(72) Inventor: **ZHANG, Yujie**
**Shenzhen, Guangdong 518057 (CN)**

(74) Representative: **WBH Wachenhausen**
**Patentanwälte PartG mbB**
**Müllerstraße 40**
**80469 München (DE)**

(54) **METHOD AND APPARATUS FOR GENERATING SHARED CARRIER, METHOD AND APPARATUS FOR PROCESSING SHARED CARRIER, AND COMPUTER-READABLE STORAGE MEDIUM**

(57)     A method and apparatus for generating a shared carrier, a method and apparatus for processing a shared carrier, and a computer-readable storage medium. The method for generating a shared carrier comprises: determining a parameter of a shared carrier on the basis of a parameter of a carrier of a first format and a parameter of a carrier of a second format (S101); generating a baseband signal of the first format and a baseband signal of the second format on the basis of the parameter of the shared carrier (S102); combining the baseband signal of the first format and the baseband signal of the second format to obtain a shared baseband signal (S 103); and generating a shared carrier on the basis of the shared baseband signal (S104).

Fig. 1

**Description**

**CROSS-REFERENCE TO RELATED APPLICATION**

The present application is based on and claims the priority of Chinese patent application No. 201911006835. 7 filed on October 22, 2019, the disclosure of which is incorporated herein by reference in its entirety.

**TECHNICAL FIELD**

Embodiments of the present disclosure relate to the technical field of communication, in particular to a method and apparatus for generating a shared carrier, a method and apparatus for processing a shared carrier, and a computer-readable storage medium.

**BACKGROUND**

When a 4th generation (4G) communication system is lightly loaded, part of spectrum bandwidths are idle, so this part of idle spectrum bandwidths can be used to transmit information of a 5th generation (5G) communication system, which is called dynamic spectrum bandwidth sharing. Of course, dynamic spectrum bandwidth sharing also includes the use of the idle spectrum bandwidths of the 5G mode to transmit information of the 4G mode.

**SUMMARY**

Embodiments of the present disclosure provide a method and apparatus for generating a shared carrier, a method and apparatus for processing a shared carrier, and a computer-readable storage medium.

In accordance with an aspect of the present disclosure, an embodiment provides a method for generating a shared carrier, including: determining parameters of the shared carrier based on parameters of a carrier of a first mode and parameters of a carrier of a second mode; generating a baseband signal of the first mode and a baseband signal of the second mode based on the parameters of the shared carrier; combining the baseband signal of the first mode with the baseband signal of the second mode to obtain a shared baseband signal; and generating the shared carrier based on the shared baseband signal.

In accordance with an aspect of the present disclosure, an embodiment provides a method for processing a shared carrier, including: determining parameters of the shared carrier based on parameters of a carrier of a first mode and parameters of a carrier of a second mode; acquiring the shared carrier, where the shared carrier is generated based on a shared baseband signal that is obtained by combining a baseband signal of a first mode with a baseband signal of a second mode, the baseband signal of the first mode and the baseband signal of the second mode being generated based on the parameters of the shared carrier; generating the shared baseband signal based on the shared carrier; and separating the baseband signal of the first mode and the baseband signal of the second mode from the shared baseband signal.

In accordance with an aspect of the present disclosure, yet another embodiment provides an apparatus for generating a shared carrier, including: at least one processor; a memory storing at least one program which, when executed by the at least one processor, causes the at least one processor to implement one of the above methods for generating a shared carrier; and at least one I/O interface connected between the at least one processor and the memory for realizing information interaction between the at least one processor and the memory.

In accordance with an aspect of the present disclosure, yet another embodiment provides an apparatus for processing a shared carrier, including: at least one processor; a memory storing at least one program which, when executed by the at least one processor, causes the at least one processor to implement one of the above methods for processing a shared carrier; and at least one I/O interface connected between the at least one processor and the memory for realizing information interaction between the at least one processor and the memory.

In accordance with an aspect of the present disclosure, yet another embodiment provides a computer-readable storage medium storing a computer program for executing the method for generating the shared carrier; alternatively, the computer-readable storage medium stores a computer program for executing the method for processing the shared carrier.

**BRIEF DESCRIPTION OF DRAWINGS**

The accompanying drawings are used to provide a further understanding of the embodiments of the present disclosure and constitute a part of the description. The accompanying drawings are used to explain the present disclosure together with the embodiments of the present disclosure, and do not constitute a restriction on the present disclosure.

The above and other features and advantages will become apparent to those having ordinary skill in the art by describing detailed embodiments with reference to the accompanying drawings, in which:

Fig. 1 is a flowchart of a method for generating a shared carrier according to an embodiment of the present disclosure;

Fig. 2 is a schematic diagram of a signal conversion process involved in a method for generating a shared carrier according to an embodiment of the disclosure;

Fig. 3 is a flowchart of a method for processing a shared carrier according to an embodiment of the present disclosure;

Fig. 4 is a schematic diagram of a signal conversion process involved in a method for processing a shared carrier according to an embodiment of the disclosure;

Fig. 5 is a block diagram of an apparatus for generating a shared carrier according to an embodiment of the present disclosure; and

Fig. 6 is a block diagram of an apparatus for processing a shared carrier according to an embodiment of the present disclosure.

## DETAILED DESCRIPTION

In order to make those having ordinary skill in the art better understand the technical schemes of embodiments of the present disclosure, a method and apparatus for generating a shared carrier and a method and apparatus for processing a shared carrier provided by the embodiments of the present disclosure are described in detail below with reference to the attached drawings.

Hereinafter, the embodiments of the present disclosure will be described more fully with reference to the accompany drawings, but the illustrated embodiments can be embodied in different forms and should not be interpreted as being limited to the embodiments set forth in the present disclosure. On the contrary, these embodiments are provided to make the present disclosure thorough and complete, and enable those having ordinary skill in the art to fully understand the scope of the present disclosure.

The embodiments of the present disclosure can be described with reference to plan views and/or cross-sectional views by means of ideal schematic diagrams of the present disclosure. Therefore, the example diagrams can be modified according to manufacturing techniques and/or tolerance.

The terminology used in the present disclosure is only used to describe specific embodiments and is not intended to limit the present disclosure. As used in the present disclosure, the term "and/or" includes any and all combinations of at least one related enumerated item. As used in the present disclosure, singular forms "a" and "the" are also intended to include plural forms, unless the context clearly indicates otherwise. As used in the present disclosure, the terms "include" and "made of" specify the presence of said features, integers, steps, operations, elements and/or components, but do not exclude the presence or addition of at least one other feature, integer, step, operation, element, component and/or groups thereof.

Unless otherwise defined, all terms (including technical and scientific terms) used in the present disclosure have the same meanings as commonly understood by those having ordinary skill in the art. It will also be understood that terms such as those defined in commonly used dictionaries should be interpreted as having meanings consistent with their meanings in the background of existing technology and the present disclosure, and will not be interpreted as having idealized or excessively formalized meanings, unless the present disclosure explicitly so defines.

In some cases, dynamic spectrum bandwidth sharing can be performed. Dynamic spectrum bandwidth sharing means that when a communication system of a certain mode is lightly loaded and there are idle spectrum bandwidths, this part of idle spectrum bandwidths is used to transmit information of other modes. Specifically, in some dynamic spectrum bandwidth sharing technologies, baseband signals of the two modes are processed independently, that is, they are shaped and filtered at respective intermediate frequencies, and then a shared carrier with information of the baseband signals of the two modes is synthesized by up-conversion aliasing and sent out. However, according to this method, communication resources of both modes (such as radio remote unit (RRU), optical fiber, etc.) need to work, resulting in unnecessary resource load, reducing available resources and increasing consumption.

The embodiments of the present disclosure relate to processing of the shared carrier.

A carrier (also referred to as air interface signal and modulated signal) is a radio frequency signal which can be transmitted (e.g., transmitted and received by an antenna) through a channel, and is composed of several subcarrier pulses, which carry information to be transmitted (information of a baseband signal). A shared carrier is obtained from baseband signals of two different modes, so it carries information of the two baseband signals.

Further, the baseband signal is a signal generated by an information source (also referred to as transmitter terminal) and carrying information to be transmitted. This signal has a low frequency, so it cannot be directly transmitted in a channel, and needs to be converted into carrier transmission.

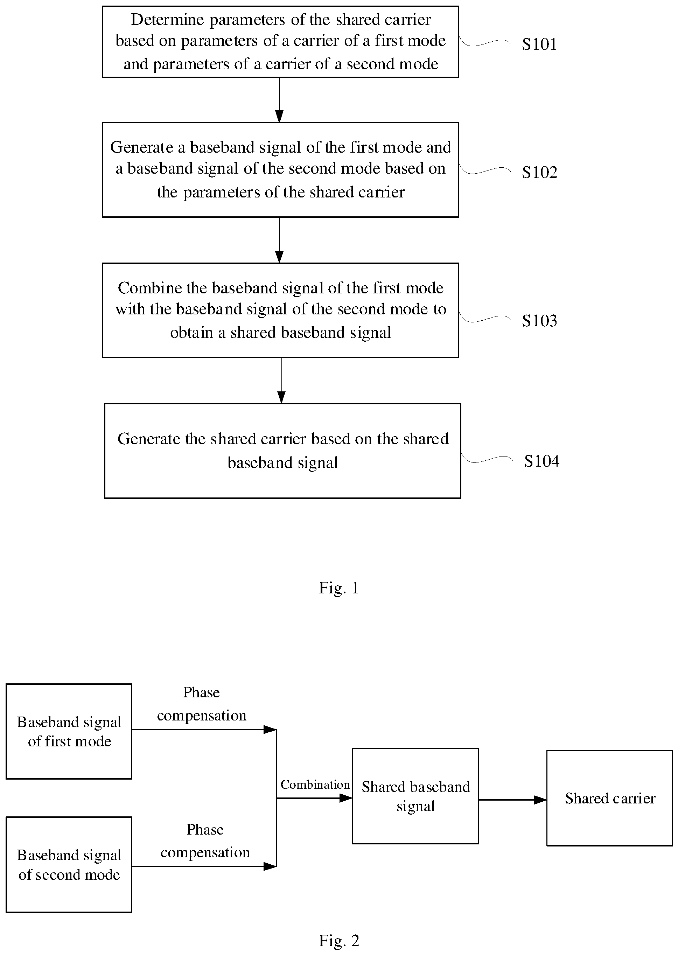

In accordance with an aspect of the present disclosure , referring to Fig. 1 and Fig. 2, an embodiment provides a method for generating a shared carrier.

The method of the embodiment of the present disclosure allows a communication base station (or user terminal) to generate a shared carrier based on baseband signals of two modes, and the shared carrier can be sent out later.

The method for generating the shared carrier according to the embodiment of the present disclosure includes the following steps.

At S101, parameters of the shared carrier are determined based on parameters of a carrier of a first mode and parameters of a carrier of a second mode.

According to the present disclosure, "mode" refers to a set of standards or technologies on which a communication process is based. In some embodiments, the first mode is 4G and the second mode is 5G. However, in some other embodiments, the first mode is 5G and the second mode is 4G.

Of course, the above 4G mode and 5G mode are illustrated as examples, and the first mode and the second mode can be any two different modes which can realize dynamic spectrum bandwidth sharing.

For the communication base station (or user terminal) realizing dynamic spectrum bandwidth sharing, it can inherently generate two kinds of carriers, namely the carrier of the first mode and the carrier of the second mode, so the parameters (and information) of these two kinds of carriers are known.

The carrier of the first mode and the carrier of the second mode are equivalent to carriers before combination in the embodiment of the present disclosure, so it is necessary to determine the parameters of the shared carrier after combination according to their parameters (and information) in order to generate the shared carrier.

At S 102, a baseband signal of the first mode and a baseband signal of the second mode are generated based on the parameters of the shared carrier.

For the communication base station (or user terminal) realizing dynamic spectrum bandwidth sharing, it will generate baseband signals of two modes respectively, for example, baseband signals of 4G and 5G modes are generated by building base band units (BBU) of the 4G and 5G modes respectively.

Since the baseband signals of the two modes in the embodiment of the present disclosure are to be combined and converted into the shared carrier, they should be generated according to the parameters of the shared carrier, rather than according to the parameters of the carriers of the respective modes (carriers before combination).

At S 103, the baseband signal of the first mode is combined with the baseband signal of the second mode to obtain a shared baseband signal.

The baseband signals of the above two different modes are combined to obtain the shared baseband signal carrying the information of the baseband signals of the two modes.

At S104, the shared carrier is generated based on the shared baseband signal.

According to the parameters of the shared carrier determined above, the shared baseband signal is subsequently subjected to intermediate frequency processing and up-conversion processing by an RRU, etc., so as to obtain the information shared carrier which is within a radio frequency range and carries the baseband signals of the two modes, and the shared carrier can be subsequently transmitted through an antenna.

According to the method of the embodiment of the present disclosure, the baseband signals of the two modes are directly combined into one shared baseband signal, so that the shared baseband signal can be processed with communication resources (such as RRU, optical fiber, etc.) of only one of the modes (the mode with idle spectrum bandwidths); in this way, unnecessary use of communication resources can be reduced, available resources can be increased, and consumption can be reduced while dynamic spectrum bandwidth sharing is realized.

In some embodiments, parameters of a carrier include subcarrier spacing and a spectrum bandwidth; the subcarrier spacing of the shared carrier, the subcarrier spacing of the carrier of the first mode and the subcarrier spacing of the carrier of the second mode are equal to each other; and the spectrum bandwidth of the shared carrier is a union of the spectrum bandwidth of the carrier of the first mode and the spectrum bandwidth of the carrier of the second mode.

When the subcarrier spacing of the carrier of the first mode is the same as that of the carrier of the second mode, the subcarrier spacing of the shared carrier is also equal to that of the carrier of the first mode (of course, the second mode), and the spectrum bandwidth of the shared carrier is the union of the spectrum bandwidth of the carrier of the first mode and the spectrum bandwidth of the carrier of the second mode.

In an implementation, suppose that the first mode is a 5G mode, its subcarrier spacing is 15 kHz, the second mode is a 4G mode, and its subcarrier spacing is also 15 kHz, then the spectrum bandwidth of the shared carrier is Bw_NR_LTE=Bw_NR U Bw_LTE, where Bw_NR is the spectrum bandwidth of the carrier of the 5G mode, Bw_LTE is the spectrum bandwidth of the carrier of the 4G mode, and U represents union.

In some cases, when the subcarrier spacing of the carrier of the first mode is different from that of the carrier of the second mode, for example, when the subcarrier spacing of the carrier of the 5G mode is 30 kHz, 60 kHz, etc., in order to avoid signal interference, a combined signal (which is not the shared baseband signal) can be obtained in a subsequent process such as intermediate frequency processing.

According to the present disclosure, the union of the above spectrum bandwidths can be accomplished by using large FFT (Fast Fourier Transform) corresponding to the united spectrum bandwidth, or by up-down sampling and filters in a time domain, which will not be described in detail here.

In some embodiments, generating a baseband signal of the first mode and a baseband signal of the second mode based on the parameters of the shared carrier (S 102) includes: generating the baseband signal of the first mode and the baseband signal of the second mode based on the subcarrier spacing, the spectrum bandwidth and a central frequency point of the shared carrier.

In an implementation, the generation process of the baseband signal may include: resource scheduling (or allocation) by an MAC (address) scheduler, RE (resource unit) mapping by a PHY (physical layer), IFFT (Inverse Fast Fourier Transform) sampling by a sampling module, adding a CP (cyclic prefix), half-carrier mapping, etc. The parameters on which these steps are based can be determined according to the subcarrier spacing, spectrum bandwidth, central frequency point, etc. of the shared carrier.

In an implementation, RE mapping can be performed based on the spectrum bandwidth Bw_NR_LTE of the shared carrier.

In an implementation, the sampling frequency fs and the sampling number $N_{FFT}$ of IFFT sampling can be determined according to the spectrum bandwidth Bw_NR_LTE, the subcarrier spacing fo, etc. of the shared carrier.

In an implementation, the CP length CpLen under different sampling numbers $N_{FFT}$ can be calculated according to the formula CpLen=[160, 144]*$N_{FFT}$/2048, and the CP can be added according to CpLen.

In some embodiments, the central frequency point of the shared carrier, a central frequency point of the carrier of the first mode and a central frequency point of the carrier of the second mode are the same.

The central frequency point is a central point of the spectrum bandwidth of the carrier, so when the spectrum bandwidth of the carrier is determined, the central frequency point of the carrier is also determined.

According to the present disclosure, if the shared carrier, the carrier of the first mode and the carrier of the second mode have the same central frequency point, the baseband signal of the first mode and the baseband signal of the second mode can be generated directly according to the central frequency point.

In an implementation, resource scheduling of two modes can be simultaneously performed with one MAC scheduler (such as a 4G or 5G MAC scheduler), and then, RE mapping is performed on both modes with the above central frequency point.

In some embodiments, the central frequency point of the carrier of the first mode is different from the central frequency point of the shared carrier; and between generating a baseband signal of the first mode based on the parameters of the shared carrier (S102) and combining the baseband signal of the first mode with the baseband signal of the second mode to obtain a shared baseband signal (S103), the method also includes: performing phase compensation on the baseband signal of the first mode based on a difference between the central frequency point of the carrier of the first mode and the central frequency point of the shared carrier.

Because the baseband signal of the first mode is mapped according to the central frequency point of the shared carrier, when the central frequency point of the carrier of the first mode is different from the central frequency point of the shared carrier, there will be a deviation (frequency offset) between zero frequency positions of a receiving end (such as user terminal) and a transmitting end (such as communication base station), which will introduce phase rotation between symbols, resulting in the user terminal's error in analyzing the baseband signal of the first mode. In order to eliminate the phase rotation, it is necessary to perform phase compensation on the baseband signal of the first mode before combination, so as to eliminate the frequency offset.

In an implementation, in the above example, a frequency offset value to be corrected for the 5G mode is: (Bw_NR_LTE-Bw_NR)/2; and a frequency offset value to be corrected for the 4G mode is: (Bw_NR_LTE-Bw_LTE)/2.

In an implementation, phase compensation can be performed through frequency offset correction, which is a process of multiplying a time domain signal by a combined sine wave. The sum of phase changes between combined sine wave sampling points is related to the sampling frequency (as before, the sampling frequency is determined by the above spectrum bandwidth), and the specific formula can be:

$$y\left(n, ka_{Rx}, l\right) = x(n, ka_{Rx}, l) \cdot e^{-j(2\pi \frac{\Delta f}{2} n T_s + \varphi_0)}$$

$$= x(n, ka_{Rx}, l) \cdot e^{-j(2\pi \frac{f_s}{N \cdot 2} n \frac{1}{f_s} + \varphi_0)}$$

$$= x(n, ka_{Rx}, l) \cdot e^{-j(\frac{\pi}{N} n + \varphi_0)}.$$

According to the present disclosure, y is a time domain signal after frequency offset correction, that is, a signal after phase compensation; n is a serial number of a sampling point; $ka_{Rx}$ is a serial number of an antenna; 1 is a serial number of a symbol; x is a time domain signal before frequency offset correction; j represents an imaginary part of a complex number; $\Delta f$ is the subcarrier spacing of the shared carrier; Ts is a sampling period; $\varphi_0$ is an initial phase, which can be 0; fs is the sampling frequency; and N is the above sampling number $N_{FFT}$.

Of course, the above phase compensation is feasible in both time domain and frequency domain, the specific algorithm is not limited to the above formula, and the method will not be introduced in detail here.

In some embodiments, the central frequency point of the carrier of the second mode is different from the central frequency point of the shared carrier; and between generating a baseband signal of the second mode based on the parameters of the shared carrier (S 102) and combining the baseband signal of the first mode with the baseband signal of the second mode to obtain a shared baseband signal (S103), the method also includes: performing phase compensation on the baseband signal of the second mode based on a difference between the central frequency point of the carrier of the second mode and the central frequency point of the shared carrier.

Similarly, when the central frequency point of the carrier of the second mode is different from the central frequency point of the shared carrier, phase compensation also needs to be performed on the baseband signal of the second mode, and the specific compensation method can be similar to that for the baseband signal of the first mode and will not be described in detail here.

It should be understood that the baseband signals of the two modes are subjected to phase compensation in a relatively independent manner, that is, whether the baseband signal of one mode should be subjected to phase compensation is not necessarily related to whether the baseband signal of the other mode is subjected to phase compensation.

Therefore, it is likely that the baseband signals of the two modes both need phase compensation, and it is also likely that only the baseband signal of one of the modes needs phase compensation. For example, if the spectrum bandwidth of the carrier of the 5G mode is larger than that of the carrier of the 4G mode, the central frequency point of the shared carrier is the central frequency point of the carrier of the 5G mode, so the baseband signal of the 5G mode does not need phase compensation. However, if the spectrum bandwidth of the carrier of the 4G mode is not located in the middle of the spectrum bandwidth of the carrier of the 5G mode, its central frequency point may not be the central frequency point of the shared carrier, so the baseband signal of the 4G mode needs phase compensation.

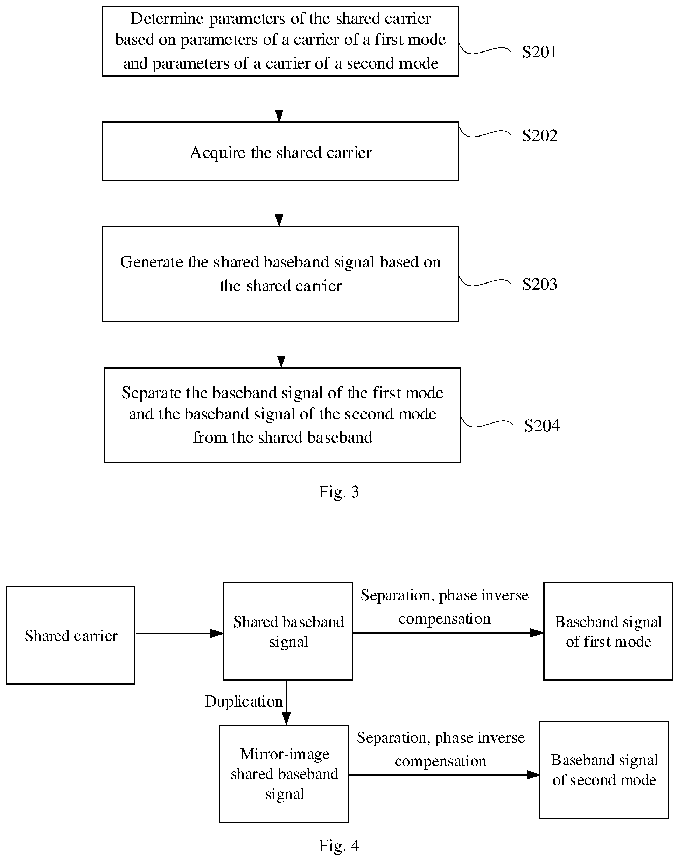

In accordance with an aspect of the present disclosure, referring to Fig. 3 and Fig. 4, an embodiment provides a method for processing a shared carrier.

The method of the embodiment of the present disclosure allows the communication base station (or user terminal) to process a received shared carrier, so as to obtain baseband signals of two modes, and determine information carried by the shared carrier according to the baseband signals.

The method for processing the shared carrier according to the embodiment of the present disclosure includes the following steps.

At S201, parameters of the shared carrier are determined based on parameters of a carrier of a first mode and parameters of a carrier of a second mode.

In some embodiments, the first mode is 4G and the second mode is 5G; alternatively, the first mode is 5G and the second mode is 4G.

According to the parameters (and information) of the carriers of the two modes before combination, the parameters of the received shared carrier are determined.

At S202, the shared carrier is acquired, where the shared carrier is generated based on a shared baseband signal that is obtained by combining a baseband signal of a first mode with a baseband signal of a second mode, the baseband signal of the first mode and the baseband signal of the second mode being generated based on the parameters of the shared carrier.

It should be understood that S201 and S202 above do not necessarily have a precedence relationship in terms of execution order, for example, the shared carrier can be acquired first, and then the parameters of the shared carrier can be determined.

At S203, the shared baseband signal is generated based on the shared carrier.

At S204, the baseband signal of the first mode and the baseband signal of the second mode are separated from the shared baseband signal.

After receiving (e.g. via an antenna) the shared carrier generated according to the method for generating the shared carrier in the above embodiment and carrying the information of the baseband signals of the two modes, the communication base station (or user terminal) performs down-conversion processing on the shared carrier according to a reverse flow to obtain the shared baseband signal, and then the baseband signals of the two modes are separated from the shared baseband signal to obtain the information therein respectively.

According to the method of the embodiment of the present disclosure, the shared carrier can be processed with communication resources (such as RRU, optical fiber, etc.) of only one mode (the mode with idle spectrum bandwidths), so that unnecessary use of communication resources can be reduced, available resources can be increased, and consumption can be reduced while dynamic spectrum bandwidth sharing is realized.

In some embodiments, S204 above includes the following steps.

At S2041, the shared baseband signal is duplicated to obtain a mirror-image shared baseband signal.

At S2042, the baseband signal of the first mode is separated from one of the shared baseband signal or the mirror-image shared baseband signal, and the baseband signal of the second mode is separated from the other of the shared baseband signal or the mirror-image shared baseband signal.

The baseband signal of each mode still needs to be processed in a processing unit of the corresponding mode (for example, BBU of the 4G mode and BBU of the 5G mode), but there is actually only one shared baseband signal processed by other units (for example, RR), so it needs to be duplicated to get two identical shared baseband signals (shared baseband signal and mirror-image shared baseband signal), and the two signals are processed in the processing units of the corresponding modes respectively to avoid mutual interference.

It should be understood that after the baseband signal is obtained, it can also be subjected to CP removal, half-carrier compensation, FFT (Fast Fourier Transform), RE demapping, etc., which will not be described in detail here.

In some embodiments, parameters of a carrier include subcarrier spacing and a spectrum bandwidth; the subcarrier spacing of the shared carrier, the subcarrier spacing of the carrier of the first mode and the subcarrier spacing of the carrier of the second mode are equal to each other; and the spectrum bandwidth of the shared carrier is a union of the spectrum bandwidth of the carrier of the first mode and the spectrum bandwidth of the carrier of the second mode.

In some embodiments, the baseband signal of the first mode and the baseband signal of the second mode are generated based on the subcarrier spacing, the spectrum bandwidth and a central frequency point of the shared carrier.

In some embodiments, the central frequency point of the shared carrier, a central frequency point of the carrier of the first mode and a central frequency point of the carrier of the second mode are the same.

In some embodiments, the central frequency point of the carrier of the first mode is different from the central frequency point of the shared carrier; and between generating the shared baseband signal based on the shared carrier (S203) and separating the baseband signal of the first mode from the shared baseband signal (S204), the method also includes: performing, based on a difference between the central frequency point of the carrier of the first mode and the central frequency point of the shared carrier, phase inverse compensation at least on a part of the shared baseband signal corresponding to the baseband signal of the first mode.

Additionally or alternatively, the central frequency point of the carrier of the second mode is different from the central frequency point of the shared carrier; and between generating the shared baseband signal based on the shared carrier (S203) and separating the baseband signal of the second mode from the shared baseband signal (S204), the method also includes: performing, based on a difference between the central frequency point of the carrier of the second mode and the central frequency point of the shared carrier, phase inverse compensation at least on a part of the shared baseband signal corresponding to the baseband signal of the second mode.

It should be understood that when the baseband signal of a certain mode is combined into the shared baseband signal after phase compensation, the shared baseband signal also needs to be subjected to phase inverse compensation opposite to the above phase compensation, so as to obtain the actual baseband signal.

According to the present disclosure, for the processing unit of each mode (such as BBU), only the part of the shared baseband signal corresponding to itself can be subjected to phase inverse compensation, so as to obtain the baseband signal of the corresponding mode through separation.

Alternatively, because the shared baseband signal is duplicated into two copies, for the processing unit (such as BBU) of each mode, it is also possible to perform phase inverse compensation on the whole shared baseband signal, and then a part corresponding to a certain mode is separated from the shared baseband signal to serve as the baseband signal of the corresponding mode.

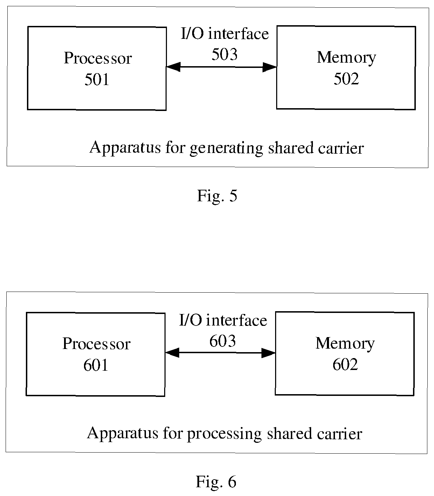

In accordance with an aspect of the present disclosure, referring to Fig. 5, an embodiment provides an apparatus for generating a shared carrier, including: at least one processor 501; a memory 502 storing at least one program which, when executed by the at least one processor 501, causes the at least one processor 501 to implement one of the above methods for generating a shared carrier; and at least one I/O interface 503 connected between the processors 501 and the memory 502 for realizing information interaction between the processors 501 and the memory 502.

In accordance with an aspect of the present disclosure, referring to Fig. 6, an embodiment provides an apparatus for processing a shared carrier, including: at least one processor 601; a memory 602 storing at least one program which, when executed by the at least one processor 601, causes the at least one processor 601 to implement one of the above methods for processing a shared carrier; and at least one I/O interface 603 connected between the processors 601 and the memory 602 for realizing information interaction between the processors 601 and the memory 602.

According to the present disclosure, the processors 501, 601 are devices with data processing capability, including but not limited to central processing unit (CPU), etc.; the memories 502, 602 are devices with data storage capability, including but not limited to random access memory (RAM, more specifically SDRAM, DDR, etc.), read-only memory (ROM), electrically erasable programmable read-only memory (EEPROM) and flash memory (FLASH); and the I/O interfaces (read-write interfaces) 503, 603 are connected between the processors 501, 601 and the memories 502, 602 respectively, and are configured to realize the information exchange between the memories 502, 602 and the processors 501, 601, including but not limited to data bus, etc.

In accordance with an aspect of the present disclosure, an embodiment provides a computer-readable storage medium storing a computer program for executing the method for generating the shared carrier according to the first aspect; alternatively, the computer-readable storage medium stores a computer program for executing the method for processing the shared carrier according to the second aspect.

According to the method of the embodiment of the present disclosure, the baseband signals of the two modes are directly combined into one shared baseband signal, so that the shared baseband signal can be processed with communication resources (such as RRU, optical fiber, etc.) of only one of the modes (the mode with idle spectrum bandwidths); in this way, unnecessary use of communication resources can be reduced, available resources can be increased, and consumption can be reduced while dynamic spectrum bandwidth sharing is realized.

It can be understood by those having ordinary skill in the art that all or some of the steps, systems and functional modules/units in the devices disclosed above can be implemented as software, firmware, hardware and appropriate combinations thereof.

In the hardware implementation, the division between functional modules/units mentioned in the above description does not necessarily correspond to the division of physical components; for example, a physical component may have multiple functions, or a function or step may be performed cooperatively by several physical components.

Some or all of the physical components may be implemented as software executed by a processor, such as a central processing unit (CPU), a digital signal processor or a microprocessor, or as hardware, or as an integrated circuit, such as an application specific integrated circuit. Such software can be distributed on computer-readable media, which can include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. The computer storage medium includes, but is not limited to, random access memory (RAM, more specifically SDRAM, DDR, etc.), read-only memory (ROM), electrically erasable programmable read-only memory (EEPROM), flash memory (FLASH) or other magnetic disk storages; compact disc-read only memory (CD-ROM), digital versatile disc (DVD) or other optical disk storages; cassette, magnetic tape, magnetic disk storages or other magnetic storages; and any other media that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and can include any information transmission media.

Several embodiments have been disclosed in the present disclosure, and although specific terms are used, they are only used and should only be interpreted in a general explanatory sense, and are not used for the purpose of limitation. In some examples, it is obvious to those having ordinary skill in the art that the features, characteristics and/or elements described in connection with a specific embodiment can be used alone or in combination with features, characteristics and/or elements described in connection with other embodiments, unless otherwise explicitly indicated. Therefore, those having ordinary skill in the art will understand that various changes in form and details can be made without departing from the scope of the present disclosure as set forth in the appended claims.

**Claims**

1. A method for generating a shared carrier, comprising:

determining parameters of the shared carrier based on parameters of a carrier of a first mode and parameters of a carrier of a second mode;

generating a baseband signal of the first mode and a baseband signal of the second mode based on the parameters of the shared carrier;

combining the baseband signal of the first mode with the baseband signal of the second mode to obtain a shared baseband signal; and

generating the shared carrier based on the shared baseband signal.

2. The method of claim 1, wherein:

parameters of a carrier comprise subcarrier spacing and a spectrum bandwidth;

the subcarrier spacing of the shared carrier, the subcarrier spacing of the carrier of the first mode and the subcarrier spacing of the carrier of the second mode are equal to each other; and

the spectrum bandwidth of the shared carrier is a union of the spectrum bandwidth of the carrier of the first mode and the spectrum bandwidth of the carrier of the second mode.

3. The method of claim 2, wherein generating a baseband signal of the first mode and a baseband signal of the second mode based on the parameters of the shared carrier comprises:

generating the baseband signal of the first mode and the baseband signal of the second mode based on the subcarrier spacing, the spectrum bandwidth and a central frequency point of the shared carrier.

4. The method of claim 3, wherein:

the central frequency point of the shared carrier, a central frequency point of the carrier of the first mode and a central frequency point of the carrier of the second mode are the same.

5. The method of claim 3, wherein:

a central frequency point of the carrier of the first mode is different from the central frequency point of the shared carrier; and between generating a baseband signal of the first mode based on the parameters of the shared carrier and combining the baseband signal of the first mode with the baseband signal of the second mode to obtain a shared baseband signal, the method further comprises: performing phase compensation on the baseband signal of the first mode based on a difference between the central frequency point of the carrier of the first mode and the central frequency point of the shared carrier;

and/or,

a central frequency point of the carrier of the second mode is different from the central frequency point of the shared carrier; and between generating a baseband signal of the second mode based on the parameters of the shared carrier and combining the baseband signal of the first mode with the baseband signal of the second mode to obtain a shared baseband signal, the method further comprises: performing phase compensation on the baseband signal of the second mode based on a difference between the central frequency point of the carrier of the second mode and the central frequency point of the shared carrier.

6. The method of claim 1, wherein:

the first mode is 4G and the second mode is 5G; or,

the first mode is 5G and the second mode is 4G.

7. A method for processing a shared carrier, comprising:

determining parameters of the shared carrier based on parameters of a carrier of a first mode and parameters of a carrier of a second mode;

acquiring the shared carrier, wherein the shared carrier is generated based on a shared baseband signal which is obtained by combining a baseband signal of a first mode with a baseband signal of a second mode, the baseband signal of the first mode and the baseband signal of the second mode is generated based on the parameters of the shared carrier;

generating the shared baseband signal based on the shared carrier; and

separating and obtaining the baseband signal of the first mode from the shared baseband signal, and separating and obtaining the baseband signal of the second mode from the shared baseband signal.

8. The method of claim 7, wherein:

parameters of a carrier comprise subcarrier spacing and a spectrum bandwidth;
the subcarrier spacing of the shared carrier, the subcarrier spacing of the carrier of the first mode and the subcarrier spacing of the carrier of the second mode are equal to each other; and
the spectrum bandwidth of the shared carrier is a union of the spectrum bandwidth of the carrier of the first mode and the spectrum bandwidth of the carrier of the second mode.

**9.** The method of claim 8, wherein:
the baseband signal of the first mode and the baseband signal of the second mode are generated based on the subcarrier spacing, the spectrum bandwidth and a central frequency point of the shared carrier.

**10.** The method of claim 9, wherein:
the central frequency point of the shared carrier, a central frequency point of the carrier of the first mode and a central frequency point of the carrier of the second mode are the same.

**11.** The method of claim 9, wherein:

a central frequency point of the carrier of the first mode is different from the central frequency point of the shared carrier; and between generating the shared baseband signal based on the shared carrier and separating and obtaining the baseband signal of the first mode from the shared baseband signal, the method further comprises: performing, based on a difference between the central frequency point of the carrier of the first mode and the central frequency point of the shared carrier, phase inverse compensation at least on a part of the shared baseband signal corresponding to the baseband signal of the first mode;
and/or,
a central frequency point of the carrier of the second mode is different from the central frequency point of the shared carrier; and between generating the shared baseband signal based on the shared carrier and separating and obtaining the baseband signal of the second mode from the shared baseband signal, the method further comprises: performing, based on a difference between the central frequency point of the carrier of the second mode and the central frequency point of the shared carrier, phase inverse compensation at least on a part of the shared baseband signal corresponding to the baseband signal of the second mode.

**12.** The method of claim 7, wherein separating and obtaining the baseband signal of the first mode from the shared baseband signal and separating and obtaining the baseband signal of the second mode from the shared baseband signal comprises:

duplicating the shared baseband signal to obtain a mirror-image shared baseband signal; and
separating and obtaining the baseband signal of the first mode from one of the shared baseband signal or the mirror-image shared baseband signal, and separating and obtaining the baseband signal of the second mode from the other of the shared baseband signal or the mirror-image shared baseband signal.

**13.** The method of claim 7, wherein

the first mode is 4G and the second mode is 5G;
or,
the first mode is 5G and the second mode is 4G.

**14.** An apparatus for generating a shared carrier, comprising:

at least one processor;
a memory storing at least one program which, when executed by the at least one processor, causes the at least one processor to implement the method for generating a shared carrier of any one of claims 1 to 6; and
at least one I/O interface connected between the at least one processor and the memory for realizing information interaction between the at least one processor and the memory.

**15.** An apparatus for processing a shared carrier, comprising:

at least one processor;
a memory storing at least one program which, when executed by the at least one processor, causes the at least one processor to implement the method for processing a shared carrier of any one of claims 7 to 13; and

at least one I/O interface connected between the at least one processor and the memory for realizing information interaction between the at least one processor and the memory.

16. A computer-readable storage medium storing a computer program for executing the method for generating a shared carrier of any one of claims 1 to 6; or,
the computer-readable storage medium storing a computer program for executing the method for processing a shared carrier of any one of claims 7 to 13.

Determine parameters of the shared carrier based on parameters of a carrier of a first mode and parameters of a carrier of a second mode — S101

Generate a baseband signal of the first mode and a baseband signal of the second mode based on the parameters of the shared carrier — S102

Combine the baseband signal of the first mode with the baseband signal of the second mode to obtain a shared baseband signal — S103

Generate the shared carrier based on the shared baseband signal — S104

Fig. 1

Baseband signal of first mode

Phase compensation

Baseband signal of second mode

Phase compensation

Combination

Shared baseband signal

Shared carrier

Fig. 2

Determine parameters of the shared carrier
based on parameters of a carrier of a first mode
and parameters of a carrier of a second mode — S201

Acquire the shared carrier — S202

Generate the shared baseband signal based on
the shared carrier — S203

Separate the baseband signal of the first mode
and the baseband signal of the second mode
from the shared baseband — S204

Fig. 3

| Shared carrier | → | Shared baseband signal | Separation, phase inverse compensation → | Baseband signal of first mode |

Duplication ↓

| Mirror-image shared baseband signal | Separation, phase inverse compensation → | Baseband signal of second mode |

Fig. 4

I/O interface
503

Processor
501

Memory
502

Apparatus for generating shared carrier

Fig. 5

I/O interface
603

Processor
601

Memory
602

Apparatus for processing shared carrier

Fig. 6

## INTERNATIONAL SEARCH REPORT

| International application No. |
| --- |
| **PCT/CN2020/112847** |

**A. CLASSIFICATION OF SUBJECT MATTER**

H04W 48/12(2009.01)i

According to International Patent Classification (IPC) or to both national classification and IPC

**B. FIELDS SEARCHED**

Minimum documentation searched (classification system followed by classification symbols)

H04W; H04L; H04Q; H04B

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE, 3GPP: 共享载波, 共享基带, 制式, 第一, 第二, 参数, 合并, 产生, 带宽, 子载波间隔, 中心频点, shared carrier, shared baseband, mode, first, second, NR, LTE, 4G, 5G, parameter, merge, combine, bandwidth, subcarrier gap, center frequency

**C. DOCUMENTS CONSIDERED TO BE RELEVANT**

| Category* | Citation of document, with indication, where appropriate, of the relevant passages | Relevant to claim No. |
| --- | --- | --- |
| A | HUAWEI et al. "Clarification on shared carrier for UL sharing" *3GPP TSG-RAN WG4 Meeting #87 R4-1807229*, 24 May 2018 (2018-05-24), section 2 | 1-16 |
| A | HUAWEI et al. "Discussion on scenario 2 for LTE-NR DC with UL sharing from UE perspective" *3GPP TSG RAN WG1 Meeting #90 R1-1712166*, 25 August 2017 (2017-08-25), entire document | 1-16 |
| A | CN 105430661 A (CHINA UNITED NETWORK COMMUNICATIONS LIMITED) 23 March 2016 (2016-03-23) entire document | 1-16 |
| A | CN 109863776 A (QUALCOMM INC.) 07 June 2019 (2019-06-07) entire document | 1-16 |
| A | CN 105792220 A (ZTE CORPORATION) 20 July 2016 (2016-07-20) entire document | 1-16 |
| A | WO 2018175211 A1 (QUALCOMM INCORPORATION) 27 September 2018 (2018-09-27) entire document | 1-16 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 November 2020** | **01 December 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2020/112847**

| Patent document cited in search report | | | Publication date (day/month/year) | Patent family member(s) | | | Publication date (day/month/year) |
|---|---|---|---|---|---|---|---|
| CN | 105430661 | A | 23 March 2016 | None | | | |
| CN | 109863776 | A | 07 June 2019 | US | 2018115906 | A1 | 26 April 2018 |
| | | | | EP | 3533251 | A1 | 04 September 2019 |
| | | | | WO | 2018080757 | A1 | 03 May 2018 |
| CN | 105792220 | A | 20 July 2016 | WO | 2016095483 | A1 | 23 June 2016 |
| WO | 2018175211 | A1 | 27 September 2018 | CN | 110431870 | A | 08 November 2019 |
| | | | | TW | 201840232 | A | 01 November 2018 |
| | | | | EP | 3603153 | A1 | 05 February 2020 |
| | | | | US | 2018279303 | A1 | 27 September 2018 |

Form PCT/ISA/210 (patent family annex) (January 2015)

## REFERENCES CITED IN THE DESCRIPTION

**Patent documents cited in the description**

- CN 201911006835